# EUROPEAN PATENT APPLICATION

(11) **EP 2 880 999 A1**
(43) Date of publication of application: **10.06.2015**
(21) Application number: 12882101.4
(22) Date of filing: 03.08.2012
(51) Int. Cl.: A23L 3/015, A23L 3/01, B30B 15/28

(54) **HIGH PRESSURE CONTAINER FOR WITHSTANDING FATIGUE OPERATING CYCLES**

(71) Applicant: Metronics Technologies S.L, 31110 Noain (Navarra) (ES)
(72) Inventor: DE ORTE GLARÍA, Benito Andrés, 31110 Noain (Navarra) (ES)
(74) Representative: Evens, Paul Jonathan
(86) International application number: PCT/ES2012/000217
(87) International publication number: WO 2014/020185

(57) **Abstract**

The invention relates to a high pressure vessel for withstanding fatigue operating cycles, in which there is placed a product (1) that is subjected to high pressure. According to the invention, the vessel is formed by coaxial cylinders (2) spaced apart from one another, with a gap (3) being provided between every two contiguous coaxial cylinders (2), into which gap a pressurized fluid is injected. The ends of the vessel are provided with sealing plugs (4) that create a hermetic seal, and the pressure applied to the fluid in the gaps (3) increases as the distance to the interior of the vessel containing the product (1) to be treated decreases.

## Description

### Field of the Art

The present invention relates to high pressure vessels, proposing a vessel having a structural embodiment suitable for withstanding very high pressures in the order of 6000 bar or higher, and for working with continuous loading and discharging cycles.

### State of the Art

Use of high pressure treatment for cleaning foods as an alternative method to thermal treatment has begun in recent years in the food industry.

Therefore, hyperbaric processing, also called high pressure processing (HPP), is a method for processing foods that comprises subjecting said foods to a high level of hydrostatic pressure, with pressures exceeding 6000 bar, for a short time period. Pressurization of foods above 6000 bar inactivates vegetative microorganisms present in foods, maintaining properties of the treated foods, without affecting their flavor or nutritional value.

The technical problem of providing vessels that are capable of withstanding pressures exceeding 6000 bar is considered for carrying out these processes. However, when working at such high pressures and in continuous loading and discharging cycles, the service life of the vessels is reduced due to the occurrence of small surface cracks which result in the vessel breaking over time.

Solutions for building cylindrical vessels with tanks having a certain capacity suitable for withstanding high pressures are currently known, one of the most widely used methods being jacketing, which comprises covering the vessel with a sleeve made of suitable material increasing the service life of the vessel. Another method known for increasing the service life of vessels intended for high pressure processes is autofrettage, which comprises a metal manufacturing technique, in which the interior of the vessel is subjected to high pressure, compressing its inner wall beyond its elastic limit, such that the mechanical properties of the wall of the vessel are modified. Another technique is based on winding square section wire on the inner wall of the vessel.

### Object of the Invention

The present invention proposes a vessel suitable for processing foods by means of high pressure processing, although it can be used for another type of industrial processes which require a vessel capable of withstanding pressures exceeding 6000 bar in continuous operating cycles of loading and discharging pressure in the interior of the vessel.

The vessel object of the invention is formed by coaxial cylinders spaced apart from one another, providing a gap between every two contiguous coaxial cylinders, into which gap a pressurized fluid, such as water, for example, is injected. The vessel has sealing plugs which are arranged at both ends to create a hermetic seal, said plugs allowing access to the interior of the vessel, in which the product to be treated is placed. The pressure of the fluid in each gap defined between coaxial cylinders gradually increases as distance to the interior of the vessel decreases, whereby creating differential pressure between every two contiguous coaxial cylinders, thereby limiting the pressure that the material of the coaxial cylinders must withstand.

The gaps farthest away from the interior of the vessel are hermetically sealed by means of permanent ring seals which are arranged between respective contiguous coaxial cylinders, whereas the gaps closest to the interior of the vessel are hermetically sealed by means of inner ring seals arranged between the coaxial cylinders and the sealing plugs of the vessel.

The coaxial cylinders decrease in length as the distance to the interior of the vessel decreases, and the sealing plugs have a stepped shape, a space in which the pressurized fluid axially compresses the coaxial cylinders being determined between the ends of each coaxial cylinder and the steps of the sealing plugs. The state of stress of the coaxial cylinders thereby improves, increasing service life of the vessel along with it.

A vessel is therefore obtained which, given its constructive and functional features, is of preferred application for the function for which it is intended in relation to fatigue operating, in applications which have to withstand pressures exceeding 6000 bar in continuous loading and discharging cycles.

### Description of the Drawings

Figure 1 shows a longitudinal section view of a very high pressure vessel for withstanding fatigue operating cycles, according to the object of the invention.
Figure 2 shows a cross-section view of the vessel.
Figure 3 is an enlarged sectional detail of the upper end part of the vessel.
Figure 4 is a longitudinal section view in which inlets for injecting pressurized fluid into the gaps defined between coaxial cylinders of the vessel can be seen.

### Description Detailed of the Invention

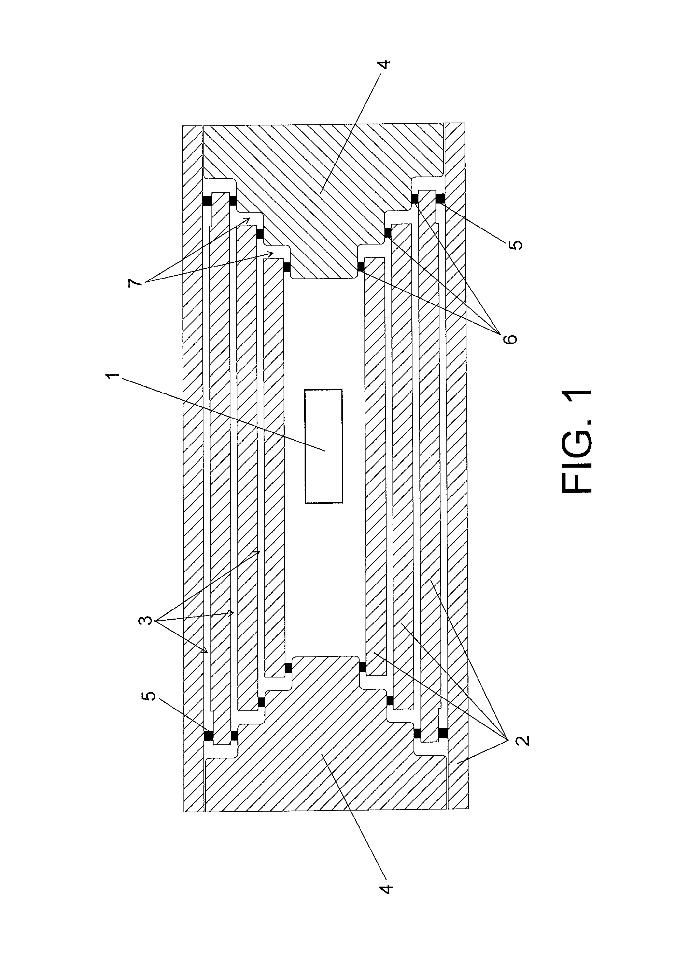

Figure 1 shows a longitudinal section view of a vessel according to the present invention, in which there is placed a product (1) to be treated. The products to be treated are generally foods which are subjected to high pressure by means of a process called high pressure processing (HPP), although the vessel can be used in any industrial process requiring a vessel capable of withstanding operating pressures of more than 6000 bar.

The vessel is formed by coaxial cylinders (2), which are spaced apart from one another, such that between every two contiguous coaxial cylinders (2) there is defined a gap (3), into which a pressurized fluid, such as water, for example, is injected. The pressure of the fluid in the gaps (3) is determined such that it progressively increases as the distance of said gaps (3) to the interior of the vessel decreases, whereby achieving that the material of the coaxial cylinders (2) is in a state of stress suitable for operation.

The ends of the vessel are hermetically sealed by means of sealing plugs (4), which allow the access to the interior of the vessel where the product (1) to be treated is housed. To create the seal, the plugs (4) are envisaged to be screwed to the inner wall of the coaxial cylinder (2) that is farthest away from the interior of the vessel, but they can also be screwed to the inner walls of the remaining coaxial cylinders (2). On one hand, in the examples of the vessel of the invention shown in the drawings, the vessel has a plug (4) at each end, although it is evident that one of the plugs (4) could be permanently fixed to the vessel, such that there would be a single inlet into the vessel.

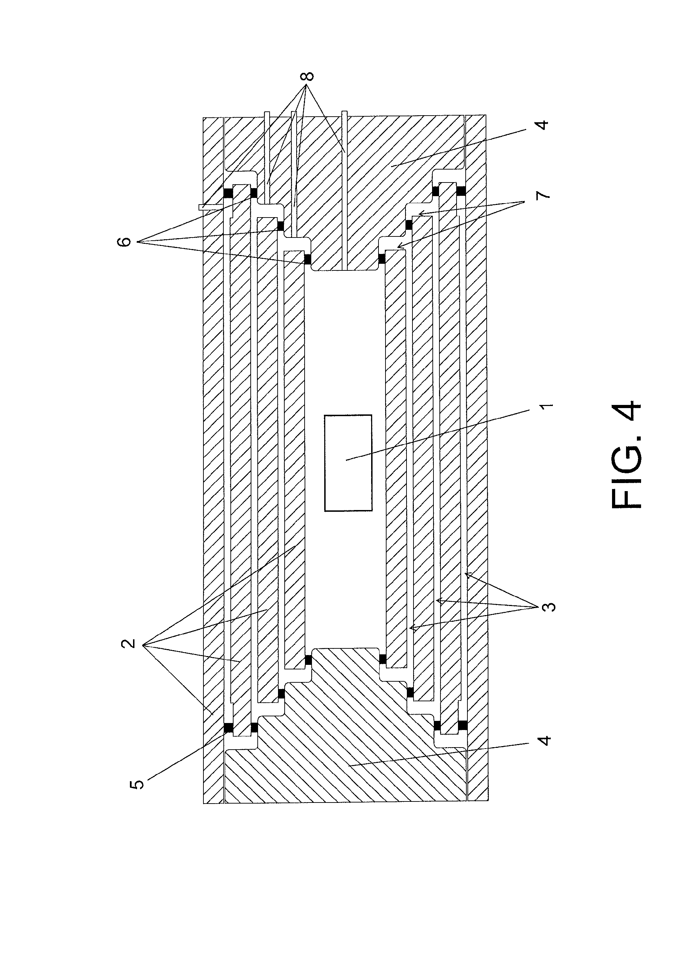

As seen in Figure 4, each gap (3) defined between two coaxial cylinders (2) has an inlet pipe (8) for injecting the pressurized fluid. Pressure is applied through the inlet pipes (8) by means of a pumping system (not depicted) which allows changing pressures at will during the loading or discharging process of the interior of the vessel in which the product (1) to be treated is placed.

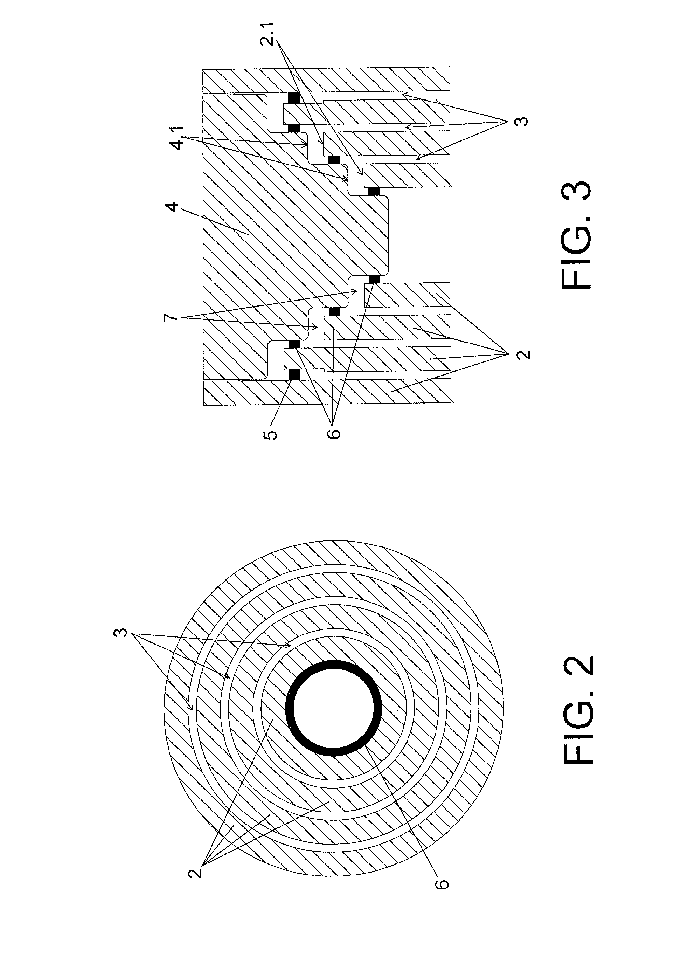

The hermetic seal of the gaps (3), into which fluid is injected at different pressures, is created by means of annular gaskets. Therefore, as can be seen in detail in Figure 3, the gap (3) defined between the coaxial cylinders (2) that are farthest away from the interior of the vessel is hermetically sealed by means of permanent ring seals (5) arranged between the side walls of contiguous coaxial cylinders (2); whereas the gaps (3) that are closest to the interior of the vessel are hermetically sealed by means of inner ring seals (6) arranged between the inner side wall of each coaxial cylinder (2) and the sealing plugs (4). The gaps (3) hermetically sealed with permanent ring seals (5) can also be more than one in number in the outermost part of the distribution of the vessel.

To help in cleaning and in replacing inner ring seals (6), it has been envisaged that said inner ring seals (6) are fixed to the side walls of the sealing plugs (4), but they could nevertheless also be fixed to the inner part of the coaxial cylinders (2), without altering the concept of the invention.

As can be seen in the drawings, the sealing plugs (4) have a stepped shape with several steps (4.1), i.e., with as many steps as there are coaxial cylinders (2), whereas the coaxial cylinders (2) decrease in length as the distance to the interior of the vessel where the product to be treated is placed decreases. Therefore, a space (7) is defined between the horizontal base of the steps (4.1) and the horizontal base of the ends (2.1) of the coaxial cylinders (2), which space (7) directly communicates with a respective gap (3) in which the pressurized fluid is located, whereby the pressurized fluid is retained by the horizontal base of the steps (4.1) of the plugs (4) and axially compresses the corresponding coaxial cylinders (2).

Each coaxial cylinder (2) is therefore subjected to radial pressure, which is greater on the side closest to the interior of the vessel than on the side farthest away from the interior of the vessel, to tangential pressure receiving the pushing of adjacent molecules canceling one another out, and to positive axial compression pressure generated by the fluid pushing on the ends (2.1) of the coaxial cylinders (2). The laws of physics concerning material fatigue states that the balance of pressures is much more beneficial for the material of the coaxial cylinders (2) than if the axial pressure were null and void of the opposite sign, such that it increases service life of the coaxial cylinders (2) forming the structure of the vessel.

This being the case, the inner ring seals (6) arranged between the plugs (4) and the coaxial cylinders (2) allow retaining the pressure in a stepped manner, i.e., said inner ring seals (6) only retain the differential pressure established between two respective contiguous coaxial cylinders (2).

On the other hand, the permanent ring seals (5) arranged directly between contiguous coaxial cylinders (2) have a dual purpose: on one hand, they eliminate axial compressive stress which can be harmful for the case of the outermost coaxial cylinders (2), and on the other hand, they keep pressure between the outermost coaxial cylinders (2) constant to reduce the number of loading and discharging cycles of the innermost coaxial cylinders (2).

To load the product (1) into the vessel and subject it to high pressure therein, all the gaps (3) defined between coaxial cylinders (2) are simultaneously pressurized, stopping the increase in pressure in each gap (3) when the required operating pressure is reached, such that the interior of the vessel will be the last part to reach its operating pressure. On the other hand, the discharging process is performed sequentially, lowering the pressure of the interior of the vessel where the product (1) is located until it is equal to the pressure of the closest gap (3), and the pressure of the successive adjacent gaps (3) thus continues to drop until reaching the gap (3) farthest away from the interior of the vessel, corresponding to the gap (3) having the permanent ring seals (5), which is at fixed pressure.

The possibility of the coaxial cylinder (2) farthest away from the interior of the vessel, or even the coaxial cylinders (2) of the interior of the vessel, being covered on their outer wall by means of some of the conventional methods used for withstanding high pressures has been envisaged. Therefore, the technique described for building the vessel of the present invention can be combined with methods, such as jacketing, i.e., covering the coaxial cylinders (2) with a sleeve made of a suitable material, autofrettage or winding a square section wire on the surface of the coaxial cylinders (2).

## Claims

1. A high pressure vessel for withstanding fatigue operating cycles, in which there is placed a product (1) that is subjected to high pressure, **characterized in that** it is formed by coaxial cylinders (2) spaced apart from one another, with a gap (3) being provided between every two contiguous coaxial cylinders (2), into which gap a pressurized fluid is injected, whereas the ends of the vessel are provided with sealing plugs (4) that create a hermetic seal, and the pressure applied to the fluid in the gaps (3) increases as the distance to the interior of the vessel containing the product (1) to be treated decreases.

2. The high pressure vessel for withstanding fatigue operating cycles according to claim 1, **characterized in that** the gaps (3) farthest away from the interior of the vessel are hermetically sealed at the ends by means of permanent ring seals (5) which are arranged between respective contiguous coaxial cylinders (2).

3. The high pressure vessel for withstanding fatigue operating cycles according to claim 1, **characterized in that** the gaps (3) closest to the interior of the vessel are hermetically sealed at the ends by means of inner ring seals (6) which are arranged between the coaxial cylinders (2) and the sealing plugs (4).

4. The high pressure vessel for withstanding fatigue operating cycles according to claim 1, **characterized in that** the coaxial cylinders (2) decrease in length as the distance thereof to the interior of the vessel decreases, whereas the sealing plugs (4) have a stepped shape with steps (4.1), a space (7) being determined between the ends (2.1) of each coaxial cylinder (2) and the steps (4.1) of the sealing plugs (4), in which space (7) the pressurized fluid of the gaps (3) axially compresses the respective coaxial cylinders (2).

5. The high pressure vessel for withstanding fatigue operating cycles according to claim 1, **characterized in that** the plugs (4) are screwed into the coaxial cylinder (2) farthest away from the interior of the vessel.

6. The high pressure vessel for withstanding fatigue operating cycles according to claim 1, **characterized in that** each gap (3) defined between two contiguous coaxial cylinders (2) has an inlet pipe (8) for injecting pressurized fluid.
